# EUROPEAN PATENT SPECIFICATION

(11) **EP 3 123 847 B1**
(45) Date of publication and mention of the grant of the patent: **08.05.2019**
(21) Application number: 15178998.9
(22) Date of filing: 30.07.2015
(51) Int. Cl.: A01B 39/18

(54) **TILTING BLADE OF ROW WEEDER**
KIPPKLINGE EINER JÄTMASCHINE
LAME BASCULANTE POUR BINEUSE

(43) Date of publication of application: 01.02.2017
(73) Proprietor: CNH Industrial Kutno sp. z o.o., 99-300 Kutno (PL)
(72) Inventor: Mieszkalski, Leszek, 02-787 Warszawa (PL); Lisowski, Aleksander, 02-787 Warszawa (PL); Klonowski, Jacek, 02-787 Warszawa (PL)
(74) Representative: Sawicki, Igor

(56) References cited:
- EP-A1- 0 916 243
- WO-A1-91/10350
- WO-A1-2012/094116
- CN-A- 103 999 582
- CN-B- 101 990 796
- GB-A- 854 761
- US-A- 5 050 372
- IRSTelevisie: "Sarl Radis Intra", Youtube, 5 June 2009 (2009-06-05), page 1 pp., XP054979069, Retrieved from the Internet: URL:https://www.youtube.com/watch?v=awsmWR K1Zl0 [retrieved on 2019-01-24]
- F. POULSEN ENGINEERING: "Robovator", , 3 May 2015 (2015-05-03), XP055546662, Retrieved from the Internet: URL:https://web.archive.org/web/2015050316 5042/http://www.visionweeding.com/ [retrieved on 2019-01-23]

## Description

The present invention is a tilting blade of row weeder whose function is a mechanical cutting of weeds growing between the plants in the row.

A known and applied orchard weeder being used for crops grown in rows consists of a frame on a suspended three-point linkage of the tractor, copying wheels, a blade lever arrangement, a rod sensor, a hydraulic drive.

The blade lever arrangement, mounted to the frame suspended on three-point linkage of the tractor, receives the drive from the hydraulic cylinder enabling the swinging of the arm with the blade. The work of the hydraulic cylinder is controlled by the rod sensor, which meeting the trunk of the tree deflects controlling the location of the distributor slide directing the oil to the hydraulic cylinder of double-sided action. In the result there is deflected the arm with the blade from the trunk of the tree. After passing the trunk of the tree through the rod sensor there takes place the switching of the distributor slide, as the result, the hydraulic cylinder of double-sided action transfers the arm with the blade into the working position. Then there takes place cutting out the weeds between the trees in the row. The blade of the orchard weeder travelling between the rows cuts the weeds only from one side of the row of the trees, whereas the weeds from the other side of the same row of the trees are cut at the return travelling in the neighbouring row.

The depth of the work of the blades is set by the change of location of the blade arm against the blade lever arrangement.

Commonly used in the agriculture the blades of the row weeders are of an angle type, goose feet, tracing blades and as the vibrating tines in the S shape. These tines are assembled on the weeding unit consisting of the parallelogram mounted to the frame of the weeder, to which the blades are rigidly mounted on the jibs. There is a mounted a copying wheel to the parallelogram. The disadvantage of these weeders is the fact that the blades cut out the weeds growing among rows of plants and do not cut out the weeds growing in rows of plants. For cutting weeds appearing out between the rows and in the rows of plants there are applied the active blades exercising complex movements, such as: pendular, reciprocating, cycloidal.

In the known row weeder produced by the company F. Poulsen Engineering ApS (e.g. XP 55546662 A) there are applied the tines bent in the L shape of the round diameter, which ends are plunged in the soil and perform the pendular movement. In between the rows there work two tines, which work is maneuverable with the electronic-visional arrangement recognizing the plants. The drive is transmitted by means of the hydraulic-electric arrangement.

The other solution is the weeder produced by the company Sarl Radis (e.g. XP 54 979 069 A), which working units are equipped with double arms finished with the blades performing counter-movement of the pendulum. The drive is transmitted to the hydraulic cylinder controlled by the electronic-visional arrangement recognizing the plants. The disclosed solution of the blades making a cycloidal move consists of hydraulic motors with vertical axes located above the rows of plants. There are fastened to the shafts the blades of the crescent shape. The cycloid loop is executed between plants in the row. Controlling the movement of the blades is achieved with the means of the electronic-visional arrangement. The disadvantage of this solution is stopping the rotary motion in the situation, when in a row are greater distances between cultivated plants, resulting from the culverts. After stopping the rotary motion of the blades there takes place cutting out the weeds as a result of the progressive movement (linear) of weeder up to the moment of the appearance of next plants in the row.

From the description of the patent application US 5 050 372, there is known a solution of the mower for removing the vegetation along the row fences. The cutting assembly of the mowing machine includes flails which are rapidly rotated and are made from fabric reinforced rubber. The flails are flexible and are about two feet long, about three-fourths of an inch thick, about three inches wide, and weigh about five pounds. The invention may be used to cut and remove vegetation and debris from under fence rows since the flails are flexible and easily mow around fence posts without damaging either the posts or the flails. The cutting assembly can be positioned so that a plane in which the cutting flails rotate is either inclined or declined to match the inclined slopes of embankments and declined slopes of drainage ditches.

The disadvantage of these lawn mowers is that they are not suitable for removing the weeds from the plants in the agricultural row crop cultivations.

From the description of the patent application WO 91/10350 there is also known a weeding apparatus for weeding between multiple rows of a row crop comprising a plurality of cutter hoe blades having substantially horizontally extending cutting edges, said blades being supported in a plurality of carrier means mounted on an elongated support member, said carrier means being spaced apart a predetermined distance along said support member and including drive means for imparting an oscillatory movement to said blades whereby said blade cutting edges are caused to move in an arc between a forward ground engaging position and an upper rearward position above the ground, and ground engaging means pivotally and adjustably mounted on each carrier means to regulate the height of each carrier means and the cutter blades relative to the ground.

The elongated support member comprise a rectangular frame adapted to be connected on one side thereof to the 3-point linkage of a tractor or like prime mover and said carrier means are mounted along the other side of the frame.

The carrier means comprise a generally shaped casing with the upstanding leg thereof secured to said frame with the ground engaging means connected to the outer end of the horizontally extending leg of the carrier means with the cutter blade depending downwardly through said horizontally extending leg.

The drive means for imparting the oscillatory movement to the cutter blade comprise a hydraulic motor mounted on the upper part of the upstanding leg of a carrier means member drivingly connected to a common drive shaft extending through all the carrier means. The drive shaft is preferably connected through gear means to a cam member connected by link means to the upper end of an arm member supporting the cutter blade at its lower end. The arm member is conveniently pivotally mounted in the horizontally extending leg of the carrier means enclosure member. The cam members or groups of cam members are mounted so that the cutter blades or groups thereof are driven out of phase with each other so as to reduce the load on the hydraulic motor and drive shaft.

The weeding apparatus of the invention also includes sensing means attached to said elongated support member for sensing the distance between the outer edge or edges of the cutter blades and the crop in each row to ensure correct lateral positioning of the cutter blades to the crop. The sensing means transmits a signal to actuating means on the support member to move same and correct any lateral deviation of the path of the apparatus through the crop. The sensing means comprise a pair of highly sensitive wands mounted on the support member and located between adjacent rows of the crop whereby the wands can contact the foliage or stems of the crop plants and transmit lateral movement thereof to an electronic control box which in turn transmits a signal to the actuating means on the support member to move the support member in the required direction and correct the travel path of the apparatus.

An alternative sensing means comprises a sled member engageable with the sides of a furrow between the crop rows and in like manner to the sensing wands transmits any lateral movement of the side members of the sled to the electronic control box. A further sensing means usable in a furrow comprises a pair of bullet nose shaped members attached to the ends of a pair of arms connected to the control box and operating in similar manner to the sled member. The lateral movement of the support frame is effected by mounting on each end of the support member a frame support wheel and a disc member engaging the inner side of a furrow, the two discs being adjusted towards each other and "locked" in both furrows against lateral movement therein. Each disc and wheel of a set are fixedly connected to the support frame through a housing carrying a hydraulic cylinder and piston actuated spindle, the outer end of which is connected by linkage to the disc and wheel. The signal from the electronic control box from the sensing means is transmitted to the hydraulic cylinder in known manner for actuation thereof to correct any sensed deviation of the path of the apparatus. Movement of the spindle and attached linkage tends to move the disc and wheel relative to the housing but as both discs are firmly engaged in the furrows against each other there can only be a resultant movement of the support frame relative to each disc and wheel pair.

The disadvantage of this device is a variable working depth of the blade as it performs the movement along the curve in relation to the substrate surface. The second disadvantage is a lack of ability of cutting out weeds growing between plants along rows.

Other patent application GB 854 761 discloses a construction of toothed mechanisms being used for a change of location, with regard to the frame, the working elements of the weeder so as: ploughshare blades, blades of the A type, disc shares, driving wheels. The co-operating toothed members for the share blades and blades of "A" type comprises a toothed pivotal arm connected to the blade and having a slot, and an initially separate toothed washer connected yin the frame part by a screw through the slot such that the blade component is adjustable with the screw slack and is locked when the screw is tightened. There are sets of teeth disposed half a pitch distance from one another on each co-operating toothed member to enable locking for close adjustments.

The co-operating toothed members for coulter discs or blades comprises a toothed quadrant connected to the blade, and an initially separate toothed disc which is mounted by an axial screw on the frame means so as to be movable out of engagement with the quadrant to enable adjustment of the blade, and which has its teeth disposed on different side edges thereof in different pitch relationship as between the disc and the quadrant, there being locating means to releasably hold the disc in alternative circumferential positions with different teeth in registry at different times for positively locking the blade in different adjusted positions. Said locating means consist of projections on the disc engaging part of the frame means in such manner that when change of circumferential position of the disc is required this may be effected after unscrewing the screw and first moving the disc to carry the projections clear of the frame means. The blade is adapted for its adjustable mounting on the frame part by pivotally connected arms, one attached to the blade and the other attached to the frame part, and wherein the co-operating toothed members are associated either with the attachment of the one arm to the frame part of with the pivotal connection between the arms.

The connections of the mentioned working elements are hardwired by gear mechanisms and cannot be applied for the constant change of their location, necessary at removing of the weeds being found between planted plants in rows.

From the description of the patent application WO 2012/094116, there is also known an automatic machine for selective local plant care. This machine include: a support movable in a trajectory along an array of plants; an image sensor, including a camera, which is mounted to or relative to the support, and which is capable of producing real-time images on an electronic image-capture device containing an array of pixels; a distance-measuring device that produces, in real time, data regarding position of the support in the trajectory relative to a positional reference; and a first controller connected to the image sensor and to the distance-measuring device, which is programmed or otherwise configured: (a) from the data obtained from the distance-measuring device and at selected discrete distances in the trajectory from the reference, to generate an activate signal triggering the image sensor to obtain an image of a respective region of interest (ROI) of the array situated at the respective selected distance from the reference, (b) to receive pixel-level image data of the ROI image from the image sensor, (c) at selected pixels of the image (e.g. , at each pixel of the image), to determine whether light received at the pixel is indicative of plant versus non-plant, (d) to determine a data distribution of plant-indicating pixels and non-plant-indicating pixels as a function of distance in the ROI and hence relative to the reference, and (e) in the distribution, determine respective positions of leading and trailing edges of plant-indicating pixels and correlating these positions with desired action or non-action to be taken with respect to selected plants in the ROI. The aim of the invention is to construct such a device that could eliminate the above defect, and enabled by automatic control of cutting of the weeds between the plants in the row in the in arable farming, with one blade attached to the lever arrangement.

The invention is a tilting blade of a row weeder according to claim 1.

It is preferable, that the hydraulic cylinder of double-sided action is connected by pneumatic hoses with an electro-distributor, controlled by a controller, a movement speed sensor of the weeder speed and a sensor of the plant distance in row.

For cutting the weeds between the plants in the row of the plants there are needed two working units of the tilting blades. One working unit of the tiling blade cuts the weeds between the plants from one side of the row, and the second working unit of the tilting blade cuts the weeds between the plants from the other side of the row. The tilting blades of row weeder, according to the invention, is characterised by the design allowing to cut the weeds out between plants in the row when the distance between plants is not equal and at small changes of the operating speed of the weeder.

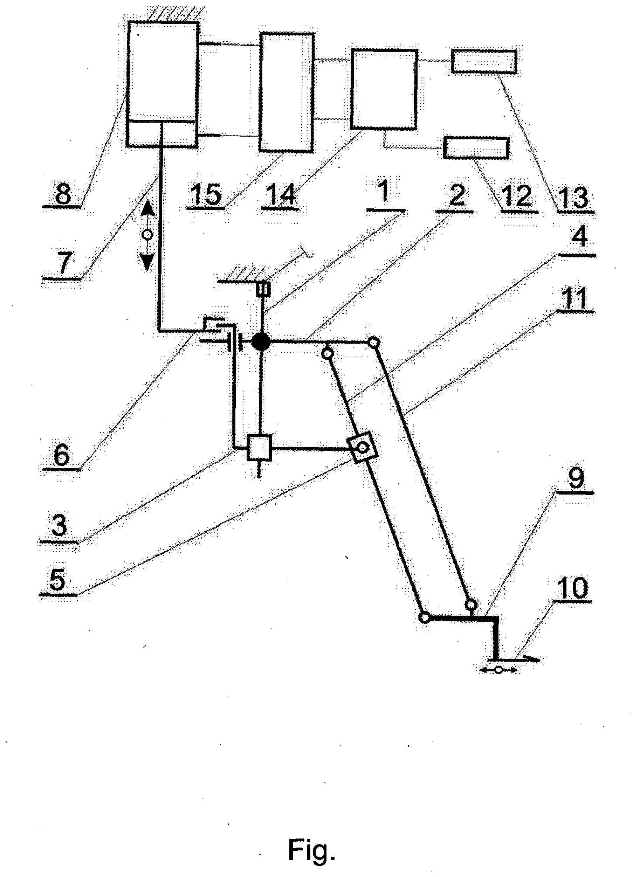

An object of the invention is presented in the example of making in the drawing in the general outline. The mounting bracket 1 is mounted to the extension arm of the weeding section of the weeder. To the bracket 1 there is mounted the extension arm 2. On the bracket 1, below the extension arm 2 there is mounted the sliding disc 3. By means of the rotatable kinematic pair with the extension arm 2 there is connected the handle of the first blade 4, which through the double rotatable and slidable kinematic pair 5 is connected with the slidable disc 3. The slidable disc 3 by means of the clutch 6 is connected with the piston 7 the hydraulic cylinder of double-sided action 8. The handle of the first blade 4 below the double rotatable and slidable kinematic pair 5 is rotatably connected with the arm 9, to which there is mounted the second blade 10.

The arm 9 is rotatably connected with one end of the connector 11. The other end of the connector 11 is also rotatably connected with the extension arm 2. The extension arm 2, the handle of the first blade 4, the arm 9 and the connector 11 make the four-bar linkage. The control arrangement consists of the movement speed sensor of the weeder speed 12, the sensor of the plant distance in the row 13, the controller 14 and the electro-distributor 15.

The action of the tilting blade of row weeder is the following. During cutting the weeds the blade makes the movement consisting of the progressive movement of the blade towards the rows of the plants and the progressive movement of the weeder in the direction in the length of the rows of the plants. The paths of the starting and the finishing points of the cutting edge of the blade are the curves parallel to each other marking the cutting areas of the blade. The arms 9 of the second blade 10 of the weeder are distributed on both sides of the row of the plants. The shape of the curve and the cutting areas depends on the working speed (progressive) of the weeder and the speed of the movement of the blade. The movement parameters of the blade are selected in such a way so that the centre of the cutting edge moves independently from the uneven distribution of the plants in the row always in the direction of the centre of the distance between the neighbouring plants in the row. The movement of the blade 10 towards the row of the plants is done by the movement in length of the bracket 1 of the sliding disc 3, to which through the double rotatable and slidable kinematic pair 5 is connected the handle of the first blade 4. The slides of the slidable disc 3 along the bracket 1 are done with the hydraulic cylinder of double-sided action 8, which the piston 7 is connected with the slidable disc 3 with the help of the clutch 6. The protrusion of the piston 7 of the hydraulic cylinder controls the control system making use of the movement speed sensor of the weeder speed 12, the sensor of the plant distance in the row 13, the controller 14 and the electro-distributor 15. The parallel location of the second blade 10 against the ground assures its connection by means of the four-bar linkage, created by the extension arm 2, the connector 11, the arm 9 of the second blade 10 and the handle of the first blade 4.

## Claims

1. A tilting blade of a row weeder mounted to a weeding section of a weeder equipped with a control system consisting of a sensor (12) of a speed of transferring of a weeder, a sensor (13) of the distance between plants in a row, an electronic distributor (15), an arm (9) and a second blade (10), the tilting blade being **characterised in that** an extension arm (2) is mounted to a bracket (1) and under it a slidable disc (3), which by means of a double rotatable and slidable kinematic pair (5), is connected with the a handle of a first blade (4), and its one end is rotatably connected with extension arm (2) whereas its other end is rotatably connected with an arm (9) of a second blade (10), the arm (9) is connected rotatably with one end of a connector (11), of which the other end is connected with the extension arm (2), in this way the extension arm (2), the handle of blade (4), the arm (9) and the connector (11) make a four-bar linkage, while the slidable disc (3), is connected in a slidable way with the extension arm (2) and by means of a clutch (6) is connected with a piston (7) of a hydraulic cylinder of double-sided action (8).

2. The titling blade according to claim 1 is **characterized in that**, the hydraulic cylinder of double-sided action (8) is connected by pneumatic hoses with the electro-distributor (15), controlled by the controller (14), the movement speed sensor of the weeder speed (12) and the sensor of plant distance in row (13).

## Patentansprüche

1. Eine Kippklinge einer Jätmaschine, befestigt an die jätende Sektion, die mit einem Steuerungssystem bestehend aus einem Sensor (12) für die Verlagerungsgeschwindigkeit der Jäthacke, einem Abstandsensor (13) für die Pflanzen in einer Reihe, einem elektronischen Verteiler (15), einem Arm (9) und einer zweiten Klinge (10) ausgestattet ist, wobei die schwenkbare Klinge **dadurch gekennzeichnet ist, dass** der Schwenkarm (2) an den Träger (1) befestigt ist, und darunter eine verschiebbare Scheibe (3), die mithilfe eines doppelten drehbaren kinematischen Paares (5) mit der Spannvorrichtung der ersten Klinge (4) verbunden ist, und deren ein Ende mit dem Schwenkarm (2) drehbar verbunden ist, während dessen deren andere Ende mit dem Arm (9) der zweiten Klinge (10) drehbar verbunden ist, der Arm (9) mit einem Arm des Verbindungsstückes (11) verbunden ist, dessen andere Ende mit dem Schwenkarm (2) verbunden ist, so dass auf diese Art und Weise der Schwenkarm (2), der Klingengriff (4), der Arm (9) und das Verbindungsstück (11) eine vierspurige Verbindung bilden, während dessen die verschiebbare Scheibe (3) auf verschiebbare Art und Weise mit dem Schwenkarm (2) verbunden ist und mithilfe der Kupplung (6) mit dem Kolben (7) des hydraulischen doppelwirkenden Zylinders (8) verbunden ist.

2. Die Kippklinge gemäß dem Anspruch 1, **dadurch gekennzeichnet, dass** der hydraulische doppelwirkende Zylinder (8) mithilfe der pneumatischen Schläuche mit dem Elektro-Verteiler (15) verbunden ist, der durch eine Steuereinheit (14), den Sensor für die Verlagerungsgeschwindigkeit der Jäthacke (12) und den Abstandsensor für die Pflanzen in einer Reihe (13) gesteuert wird.

## Revendications

1. Lame basculante pour bineuse fixée à la section de binage (de désherbage) équipée d'un système de commande composé d'un capteur (12) de vitesse de déplacement de la bineuse, d'un capteur (13) de distance de plantes dans un rang, d'un séparateur électronique (15), d'un bras (9) et d'une deuxième lame (10), la lame pivotante étant **caractérisée en ce que** le bras du bras-support (2) est monté au support (1), et au dessous de lui se trouve un disque coulissant (3) qui à l'aide d'un couple cinématique double rotatif et coulissant (5) est relié au manchon de la première lame (4), et l'un de ses bouts est relié de manière pivotante au bras-support (2), pendant que son autre bout est relié de manière rotative au bras (9) de la deuxième lame (10), le bras (9) étant relié de manière rotative à l'un bout du connecteur (11) dont le deuxième bout est relié au bras-support (2), de manière que le bras-support (2), le manchon de la lame (4), le bras (9) et le connecteur (11) forment une connection à quatre bandes, pendant que le disque coulissant (3) reste relié de manière coulissante au bras-support (2) et à l'aide de l'embrayage (6) au piston (7) du cylindre hydraulique à action bilatérale (8).

2. Lame basculante selon la revendication 1, **caractérisée en ce que** le cylindre hydraulique à action bilatérale (8) est relié à l'aide de tuyaux pneumatiques au séparateur électronique (15), commandé par le système de commande (14), le capteur de vitesse de déplacement de la bineuse (12) et le capteur de distance de plantes dans un rang (13).
